Europäisches Patentamt

(19) European Patent Office

Office européen des brevets

(11) Publication number: **0 082 615**

**A1**

(12) **EUROPEAN PATENT APPLICATION**

(21) Application number: **82306358.1**

(22) Date of filing: **30.11.82**

(51) Int. Cl.³: **G 01 H 9/00**

(30) Priority: **21.12.81 US 332792**

(43) Date of publication of application:
**29.06.83 Bulletin 83/26**

(84) Designated Contracting States:
**DE FR GB NL**

(71) Applicant: **Hughes Aircraft Company**
**Centinela & Teale Streets**
**Culver City California 90230(US)**

(72) Inventor: **Myer, Jon H.**
**22931 Gershwin Drive**
**Woodland Hills California 91364(US)**

(72) Inventor: **Morrison, Robert J.**
**276 Green Lea Place**
**Thousand Oaks California 91361(US)**

(74) Representative: **Milhench, Howard Leslie et al,**
**A.A. Thornton & Co. Northumberland House 303/306**
**High Holborn**
**London, WC1V 7LE(GB)**

(54) **Opto-mechanical ripple transducer with adjustable sensitivity.**

(57) A transducer (20) for detecting applied acoustic signals (31) and the like. The transducer (20) comprises two ridged members (21, 22) having parallel juxtaposed rippled surfaces (23, 24) which compress and deform an optical fiber waveguide therebetween. The two rippled surfaces (23, 24) have predetermined ripple pitches associated therewith. Resilient means (28, 36) are coupled to the ridged members (23, 24) which restricts the lateral movement of the ridged members (21, 22) so that the rippled surfaces (23, 24) are constrained to move normal to their respective surfaces. Thus, the resilient means (28, 36) allow the ridged members (21, 22) to move along an axis between them and compress and deform the fiber waveguide disposed therebetween. The resilient means (28, 36) may also be constructed to preload the amount of compression exerted on the waveguide. Sensitivity adjustment means (30, 38) are provided for adjusting the relative positions of the two ridged members (21, 22), which position the two rippled surfaces (23, 24) relative to one another. This ajustment controls the overall sensitivity of the transducer (20).

Fig. 1

## OPTO-MECHANICAL RIPPLE TRANSDUCER WITH
## ADJUSTABLE SENSITIVITY

### TECHNICAL FIELD

The present invention relates generally to hydrophones and more particularly to hydrophone which employ optical waveguide transducers as sensing elements.

### BACKGROUND OF THE INVENTION

Heretofore, there has been much work related to development of hydrophones for use in sonar towed arrays, fixed coastal or deep water arrays, and torpedo guidance systems, and the like. Piezoelectric transducers have been developed for use with these systems but they have a number of problems. The towed array system has on the order of 250 channels, and each transducer channel consumes power on the order of 25 watts, resulting in approximately 6 kilowatts of power dissipated in the towed array. Furthermore, piezoelectric transducers are low efficiency devices at low acoustic frequencies, on the order of a few hundred hertz or below, and they exhibit non-uniform response at these frequencies. Additionally, these systems are very costly and have reliability problems due to their complexity. Piezoelectric transducers are sealed in a watertight enclosure containing an insulating oil. The transducers become inoperative when wet and cease to function. Thus, the hermetic seal of the enclosure must be excellent for the transducers to perform properly in a water environment.

Because of the above-mentioned difficulties with conventional detection systems, there has been interest in the development of fiber-optic phase modulated transducers. However, such transducers are sensitive to environmental factors, such as temperature changes, particularly to low-frequencies. The phase response of the fiber-optic materials to a temperature variation of 1°C is larger than a response to a pressure change of 1Pa (Pascal) by a factor of more than $10^6$. Accordingly, temperature fluctations and the phase shifts resulting therefrom interfere severly with such phase-modulated systems.

Additionally, conventional hydrophone systems employ electrical conductors between the transducer elements and signal processor units, which cause electrical connection problems due to the deterioration of solder joints and loose connector pins. Crosstalk between adjacent channels and electromagnetic interference also detrimentally affect performance of such conventional systems. Furthermore, many conventional hydrophone systems require the use of preamplifiers located near or at the transducer to provide for sufficient signal strength for transmission to the signal processor. For an additional discussion of the drawbacks of conventional hydrophones, reference is made to U.S. Patent 3,831,137 for "Acousto-Optic Underwater Detector".

Recent developments in the fiber optical waveguide art have led to the development of an optical coupler which utilizes the concept of mode conversion between etched optical fibers. The concept of mode conversion in optical fibers is relatively well-known in the art. Mode conversion in optical fibers as it relates to an optical coupler is discussed in a paper by L. Jeunhomme et al, entitled "Directional Coupler for Multimode Optical Fibers," Applied Phisic Letters, October 1976. A system is disclosed therein as it pertains to an experiment for coupling energy out of a multimode optical fiber. The system employs aluminum gratings having opposed rippled surfaces having an optical fiber disposed therebetween. The system and experiments therein relate strictly to the study of mode conversion and optical coupling of energy out of the optical fiber, and does not relate to optical hydrophones for detecting acoustic signals. The system disclosed therein has a fixed lower grating and the upper grating is secured at a fixed position by means of a mechanical screw arrangement. The relative positions between the two gratings are meant to be manually adjustable so as to allow for optimal selective coupling out of the waveguide. Application of this device for the detection of acoustic signals was never considered, and it is neither disclosed nor suggested that the system therein could be used for such an application.

U.S. patent No. 4,071,753 entitled "Transducer for Converting Acoustic Energy Directly Into Optical Energy", by Fulenwider et al, discloses a transducer which employs an optical waveguide through which light is transmitted. As shown in FIG. 6 thereof, the light passing through the optical fiber may be modulated by means of bending the waveguide. The optical fiber is placed across two fixed supports and a diaphragm is coupled to the waveguide between the supports by means of a depending member which bares on the optical waveguide. Modulation of the position of the diaphragm in turn causes bending of the optical fiber. The bending of the optical fiber results in modulation of the light transmitted therethrough.

## SUMMARY OF THE INVENTION

The present invention provides for an opto-mechanical hydrophone transducer which employs the principles of microbend attenuation in optical fibers as the basis for operation. The transducer comprises a first ridged member having a first rippled surface disposed along a lateral dimension which has a first predetermined ripple pitch. A second ridged member has a second rippled surface disposed along the lateral dimension which has a second predetermined ripple pitch. The rippled surfaces may have identical ripple pitches, or differing ripple pitches as disclosed in the copending patent application cited above.

An optical fiber waveguide is disposed between the two rippled surfaces. Resilient means are coupled to the first and second ridged members for restricting movement of the members along the lateral dimension. The resilient means also allows movement of the members along an axis therebetween (normal to the rippled surfaces) which permits compressing of the waveguide. The resilient means may be a flat spring or leaf spring arrangement coupled to the rigid members for providing a mechanical prestress bias to the waveguide. The rippled surfaces are thus positioned in a laterally immovable yet vertically resilient configuration.

In addition, the present invention provides for adjustment means which adjust the relative positions of the first and second ridged members along the lateral dimension. The adjustment means allows for adjustment of the relative positions of the two rippled surfaces along the lateral dimension. By adjusting the relative positions of the rippled surfaces, the sensitivity of the transducer is controlled.

BRIEF DESCRIPTION OF THE DRAWINGS

The various features and advantages of the present invention may be more readily understood with reference to the following detailed description taken in conjunction with the accompanying drawings, wherein like reference numerals designate like structual elements, and in which:

FIG. 1 illustrates a perspective view of a hydrophone transducer in accordance with the principles of the present invention;

FIG. 2 illustrates an exploded perspective view of the hydrophone transducer of FIG. 1; and

FIG. 3 is an end view of the transducer of FIG. 1, taken along the lines 3-3.

DETAILED DESCRIPTION

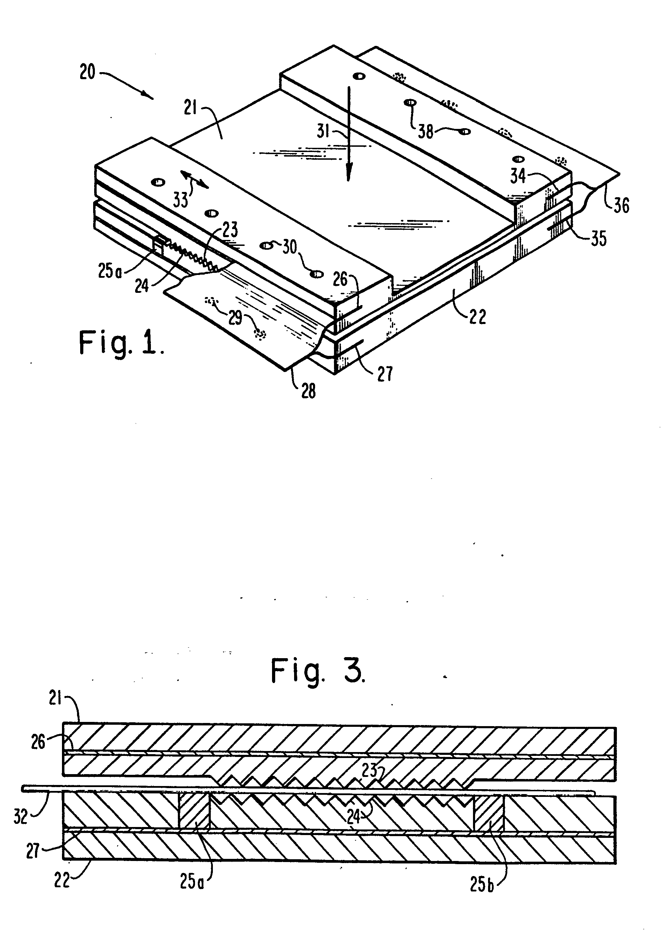

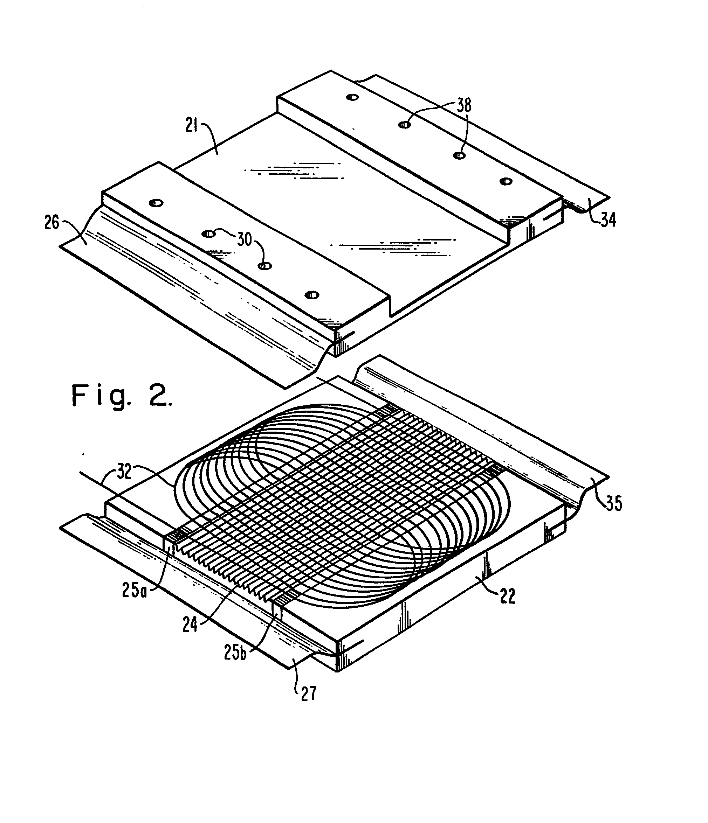

Referring to FIG. 1 there is shown a perspective view of a hydrophone transducer in accordance with the principles of the present invention. The transducer 20 is comprised of a first ridged member 21 having a first rippled surface 23. The first rippled surface 23 has a first predetermined ripple pitch. A second ridged member 22 which has a second rippled surface 24 having a second predetermined ripple pitch, is disposed adjacent to the first ridged member. The rippled surfaces 23, 24 may have identical or differing ripple pitches associated therewith. The two ridged members 21, 22 are disposed such that the rippled surfaces 23, 24 are parallel and juxaposed relative to one another. An optical waveguide 32 (shown in FIG. 2) is disposed between the ridged members 21, 22, in the area of the rippled surfaces 23, 24.

The first and second rippled surfaces 23, 24 are disposed along a lateral dimension of respective ridged members 21, 22. A pair of guiding surfaces 25, such may be provided by fine-toothed gear racks, or the like, are disposed in the second ridged member 22 along a direction parallel to the rippled surface 24. Resilient means, such as a flat spring arrangement, or two leaf springs 26, 27, are attached to respective ridged members 21, 22 along one edge thereof. The two leaf springs 26, 27, are secured together in the area 28 by means of spot welds 29, or the like. Alternatively, the two leaf springs 26, 27 may be replaced by a single leaf spring bent in the appropriate configuration. A second resilient means, such as is provided by leaf springs 34, 35 is disposed at the opposite ends of respective ridged members 21, 22. The two leaf springs 34, 35 are also secured together in the area 36 by means of spot welds 37.

A plurality of adjustment screws 30, 38, are provided as part of the first and second ridged members 21, 22 respectively. The adjustment screws 30 are employed to secure the first ridged member 21 to the leaf spring 26. Similarly the adjustment screws 38 provide a similar function at the other end of the first ridged member 21, and similar screws (not shown) secure the second rigid member 22 to its leaf springs 27, 34. The adjustment screws 30, 38 provide a means by which to adjust the relative lateral position of the first ridged member to the second ridged member 22. This, in turn, adjusts the relative positions of the rippled surfaces 23, 24, which controls the sensitivity of the transducer 20.

Referring to FIG. 2, an exploded perspective view of the transducer 20 of FIG. 1 is shown. FIG. 2 shows in more detail the construction of the internal area of the transducer 20. The fiber optic waveguide 32 is shown positioned across the second rippled surface 24.

The waveguide 32 is shown crossing the rippled surface 24 a plurality of times. This improves the sensitivity of the transducer 20. The guiding surfaces 25a, 25b are also shown in clear detail.

FIG. 3 shows an end view of the transducer 20 of FIG. 1, taken along the lines 3-3. The relative positions of the rippled surfaces 23, 24 and the waveguide 32 disposed therebetween are shown more clearly. The rippled surfaces 23, 24 are shown having even relative spacing between ripples, although as mentioned above, this need not be a requirement. The waveguide 32 is compressed and deformed by the two rigid members 21, 22 by means of the rippled surfaces 23, 24. This causes microbend attenuation of light transmitted through the waveguide 32 in the areas in which the rippled surfaces contact the waveguide 32.

In operation, the transducer 20 of FIG. 1 is such that the two rippled surfaces 23, 24 compress and deform the optical waveguide 32 therebetween. The leaf springs provide an appropriate amount of force bias for control of multimode attenuation in the waveguide 32. The relative positions of the two rippled surfaces 23, 24 are adjusted by means of sliding the two ridged members 21, 22 relative to one another along the transverse dimension identified by arrow 33. Adjustment of the relative positions of the two rippled surfaces 23, 24 effects the overall sensitivity of the transducer 20. The force sensitivity of the transducer is a function of the relative positions of the two rippled surfaces 23, 24, and in particular, the spacing between contact points of the rippled surfaces 23, 24 and the waveguide 32. This is discussed in the copending application cited in the background. Once the desired operating sensitivity is obtained, which may be determined by applying an optical signal, such as laser light, to one end of the waveguide 32 and detecting the signal at the other end thereof, the two ridged members 21, 22 are secured together and locked into place by means of the adjustment screws 30, 38. The use of the resilient means and the adjustment screws 30, 38 act to restrict movement of the ridged members along the lateral dimension 33 while allowing movement of the members along a normal axis between the members 21, 22 which permits compressing and deforming the waveguide 32.

Consequently the ridged members are free to compress the waveguide 32 upon the application of applied acoustic signals, or the like, represented by arrow 31 in FIG. 1. In addition the leaf springs 26, 27, 34, 35 may be selected to preload the compression of the waveguide 32 in order to obtain maximum sensitivity of the transducer 20. Further compression or relaxation of the waveguide 32 by means of the applied acoustic signals, results in modulation of the microbend attenuation of light transmitted through the waveguide 32. This results in a modulated light signal transmitted through the waveguide 32, and hence provides an indication of the applied acoustic signals.

Thus, there has been described a new and improved hydrophone transducer for use in detecting acoustic signals, or the like. It is to be understood that the above-described embodiment is merely illustrative of one of the many specific embodiments which represent applications of the principles of the present invention. Clearly, numerous and varied other arrangements may be readily devised by those skilled in the art without departing from the spirit and scope of the invention.

AAD:blm

[5-13/34-3]

## CLAIMS

**What is Claimed is:**

1. A hydrophone transducer comprising:
a first ridged member having a first rippled surface having a first predetermined ripple pitch disposed along a lateral dimension;
a second ridged member having a second rippled surface with a second predetermined ripple pitch disposed along said lateral dimension;
an optical fiber waveguide disposed between said rippled surfaces; and
resilient means coupled to said first and second ridged members for restricting movement of said members along said lateral dimension, and allowing movement of said members along an axes therebetween which permits compressing and deforming of said fiber waveguide.

2. A transducer of Claim 1 which further comprises:
adjustment means for adjusting the relative positions of said first and second ridged members along said lateral dimension, hence adjusting the relative positions of said rippled surfaces along said lateral dimension and thus controlling the sensitivity of said transducer.

3. The transducer of Claims 1 or 2 wherein said resilient means comprises a plurality of leaf spring arrangements coupled to said rigid members for providing a mechanical prestress force bias to said waveguide.

4. The transducer of Claim 1 wherein said resilient means comprises flat spring means coupled to said rigid members for providing a mechanical prestress force bias to said waveguide.

4. The transducer of Claim 1 wherein said resilient means comprises a plurality of leaf spring arrangements coupled to said rigid members for providing a mechanical prestress force bias to said waveguide.

5. The transducer of Claim 1 wherein said resilient means comprises flat spring means coupled to said rigid members for providing a mechanical prestress force bias to said waveguide.

6. The transducer of Claim 1 wherein said first and second rippled pitches are identical.

7. The transducer of Claim 2 which further comprises:
a plurality of guiding surfaces (25a, 25b) disposed adjacent to the rippled surface of one of said rigid members for securing said waveguide in a fixed position relative to said rippled surfaces.

8. The transducer of Claim 1 which further comprises:
a plurality of guiding surfaces (25a, 25b) disposed adjacent to the rippled surface of one of said rigid members for securing said waveguide in a fixed position relative to said rippled surfaces.

Fig. 1.

Fig. 3.

Fig. 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | EP-A-0 027 540 (HYDROACOUSTICS INC.) *Page 18, line 16 to page 22, line 1; figures 2,5,6,12* | 1,6 | G 01 H 9/00 |
| A | APPLIED OPTICS, vol. 20, no. 2, 15th January 1981, pages 167,168, New York (USA); N.LAGAKOS et al.: "Multimode optical fiber displacement sensor". *Page 167, left-hand column, paragraph 1 - right-hand column, paragraph 1; figure 1* | 1,6 | |
| A | JOURNAL OF THE ACOUSTICS SOCIETY OF AMERICA, vol. 67, no. 3, March 1980, pages 816-818, New York (USA); J.N.FIELDS et al.: "Fiber optic pressure sensor". *Page 816, left-hand column, paragraph 1 - page 817, left-hand column, paragraph 2; figure 1* | 1,6 | |

TECHNICAL FIELDS SEARCHED (Int. Cl. ³)

G 01 H
G 02 F

The present search report has been drawn up for all claims

| Place of search | Date of completion of the search | Examiner |
|---|---|---|
| THE HAGUE | 04-03-1983 | STUBNER E.B |